# EUROPEAN PATENT APPLICATION

(11) **EP 3 905 180 A2**
(43) Date of publication of application: **03.11.2021**
(21) Application number: 19905050.1
(22) Date of filing: 26.12.2019
(51) Int. Cl.: G06Q 30/06

(54) **METHOD FOR PROVIDING FASHION ITEM RECOMMENDATION SERVICE TO USER BY USING SWIPE GESTURE**

(30) Priority: 26.12.2018 KR 20180168857
(71) Applicant: Odd Concepts Inc., Seoul 06133 (KR)
(72) Inventor: YOO, Ae Ri, Namyangju-si, Gyeonggi-do 12177 (KR)
(74) Representative: Gramm, Lins & Partner Patent- und Rechtsanwälte PartGmbB
(86) International application number: PCT/KR2019/018445
(87) International publication number: WO 2020/138941

(57) **Abstract**

The present invention relates to a method for providing a fashion item recommendation service by using fashion items composed of multi-layers displayed on a user device. Particularly, the method comprises the steps of: relating, to the multi-layers, a coordination item list containing a plurality of coordination items having a category differing from that of the specific fashion item, so as to display the coordination item list in a layer popup form on a coordination item display region of a user device corresponding to the different category; determining whether a specific coordination item is selected according to a swipe gesture received with respect to the specific coordination item configured in the current layer displayed on the coordination item region; and storing the specific coordination item as a preference item when the specific coordination item is selected.

## Description

### Technical Field

The present disclosure relates to a method for providing fashion item recommendation service to a user and, more particularly, to a method for providing a recommendation service for fashion items composed of multi-layers displayed on a user device by using a swipe gesture.

### Background Art

In the background of the recently increased wired/wireless Internet environment, online commerce such as promotion and sales are being activated. In this regard, when buyers find a product which they like while searching for a magazine, blog, or YouTube video on a desktop or mobile terminal connected to the Internet, they search for a product name and eventually lead to purchase of the product. For example, the name of a bag that a famous actress had at the airport and the name of a childcare product from an entertainment program are ranked at the top of the portal site's real-time search query rankings. However, in this case, the user has to separately open a web page for searching to search for a product name, manufacturer, and sales vendor, and there is an inconvenience in that it is not easy to search unless clear information about the product name, the manufacturer, and the sales vendor is already known.

Meanwhile, sellers spend a lot of money on media sponsorship and online user recruitment in addition to commercial advertisements for product promotion. This is because online reputation acts as an important variable in product sales these days. However, there are frequent cases in which shopping information such as product names and sales locations cannot be exposed despite the expenditure of promotional expenses. This is because indirect advertising issues may arise because the media viewers' prior approval for the exposure of the product name cannot be obtained individually.

As described above, there is a need for both users and sellers to provide shopping information for online product images in a more intuitive user interface (UI) environment.

### Disclosure

### Technical Problem

Based on the above discussion, in the following description, a service that recommends fashion items composed of multi-layers displayed on a user device using a swipe gesture is provided.

The technical problems to be solved by the present disclosure are not limited to the above technical problems, and other technical problems that are not mentioned will be clearly understood by those of ordinary skill in the technical field to which the present disclosure belongs from the following description.

### Technical Solution

In accordance with an aspect of the present disclosure, a method for providing a fashion item recommendation service by using fashion items composed of multi-layers displayed on a user device may include: configuring a coordination item list composed of a plurality of coordination items having a different category from a category of a specific fashion item to be associated with the multi-layers, and displaying the coordination item list in a form of layer popup in a coordination item display area of the user device corresponding to the different category; determining whether to select a specific coordination item according to a swipe gesture received for the specific coordination item configured in a current layer displayed in the coordination item area; and storing the specific coordination item as a preference item when the specific coordination item is selected.

In addition, the determining whether to select the specific coordination item may include determining that the specific coordination item is selected when a direction of the swipe gesture corresponds to a direction indicating a predetermined highest priority; excluding the specific coordination item from the coordination item list when the direction of the swipe gesture is a direction opposite to the direction indicating the predetermined highest priority; displaying a coordination item configured in a previous layer of the current layer on the multi-layers when the direction of the swipe gesture is a direction indicating switching to a predetermined previous layer; and displaying a coordination item configured in a next layer of the current layer on the multi-layers when the direction of the swipe gesture is a direction indicating switching to a predetermined next layer. In addition, the determining that the specific coordination item is selected may further include updating a product similar to the specific coordination item in the coordination item list based on image similarity from a product database configured by indexing a label for the specific coordination item.

In addition, the determining whether to select the coordination item may include modifying a type of the current layer and displaying the modified type of the current layer on the coordination item display area, based on the direction of the swipe gesture.

In addition, the method may further include displaying the preference item in a selection item display area of the user device; and providing a product purchase service through a web page associated with the preference item when an input for the preference item is received.

In addition, the specific fashion item may be acquired from a user fashion database generated based on a plurality of fashion items worn by the user, which is extracted from an image through which the user stored in the user device can be identified.

### Advantageous Effects

According to an embodiment of the present disclosure, it is possible to efficiently provide a recommendation service for fashion items composed of multi-layers displayed on a user device by using a swipe gesture.

The effects that can be obtained in the present disclosure are not limited to the above-mentioned effects, and other effects that are not mentioned can be clearly understood by those of ordinary skill in the art from the following description.

### Description of Drawings

The accompanying drawings, which are included as part of the detailed description for aiding understanding of the present disclosure, provide embodiments for the present disclosure, and describe the technical idea of the present disclosure together with the detailed description.
FIG. 1 is a reference diagram illustrating a user device for providing a recommendation item service for fashion items composed of multi-layers according to an embodiment of the present disclosure.
FIG. 2 is a reference diagram illustrating a display screen of a user device for providing a recommendation item service for fashion items composed of multi-layers according to another embodiment of the present disclosure.
FIG. 3 is a reference diagram illustrating a scenario in which a user's input is received through a swipe gesture when a recommendation item service for fashion items composed of multi-layers is provided according to an embodiment of the present disclosure.
FIG. 4 is a reference diagram illustrating a scenario in which a recommendation item service for fashion items composed of multi-layers is provided according to an embodiment of the present disclosure, and when a user selects a specific fashion item, a user's purchase is induced by connecting to the selected fashion item.
FIG. 5 is a reference diagram illustrating an example of displaying a current layer being displayed according to a direction of a swipe gesture for a user device.
FIG. 6 is a reference diagram illustrating multi-layers configured to be associated with fashion items according to an embodiment of the present disclosure.
FIG. 7 is a flowchart illustrating a method of providing a recommendation service to a user by using fashion items composed of multi-layers according to an embodiment of the present disclosure.
FIG. 8 is a reference diagram illustrating a method of providing a fashion item recommendation service by a user device through a service server according to an embodiment of the present disclosure.

### Mode for Invention

The present disclosure is not limited to the description of the embodiments to be described below, and it is obvious that various modifications may be made without departing from the technical gist of the present disclosure. Further, in describing the embodiments, descriptions of technical contents that are widely known in the technical field to which the present disclosure pertains and are not directly related to the technical gist of the present disclosure will be omitted.

Hereinafter, it is assumed that a user device displaying product information is a mobile device, but the present disclosure is not limited thereto. That is, in the present disclosure, the user device should be understood as a concept including all types of electronic devices capable of requesting search and displaying advertisement information, such as a desktop, a smart phone, and a tablet PC.

In addition, it should be noted that the concept of products in this specification is not limited to tangible products. That is, in this specification, a product should be understood as a concept including not only tangible products but also intangible services that can be sold.

Furthermore, in the present specification, the term "a displayed page in an electronic device" may be understood as a concept including a screen loaded in an electronic device so that it can be immediately displayed on a screen according to a user's scroll and/or content within the screen. For example, on the display of a mobile device, the entire execution screen of an application, which is extended horizontally or vertically and displayed according to the user's scrolling, may be included in the concept of the page, and the screen in a camera roll is also included in the concept of the page.

Meanwhile, in the accompanying drawings, the same components are represented by the same reference numerals.

In addition, in the accompanying drawings, some components may be exaggerated, omitted, or schematically illustrated. This is to clarify the gist of the present disclosure by omitting unnecessary description not related to the gist of the present disclosure.

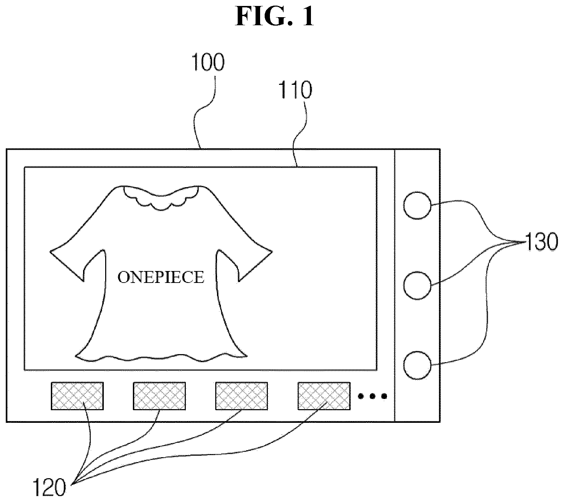

FIG. 1 is a reference diagram illustrating a user device for providing a recommendation item service for fashion items composed of multi-layers according to an embodiment of the present disclosure.

A user device 100 according to the present disclosure may briefly include a display area 110, an information providing area 120 capable of providing information (e.g., a thumbnail, etc.) that can visually provide a user with items selected by a user, and an application control area 130 for controlling an application related to a fashion item recommendation service. On the user device 100 according to the present disclosure, for convenience of description, the display area 110, the information providing area 120, and the control area 130 are separately described. However, in some cases, the user device 100 may be controlled through a user's gesture, such as a user's hand gesture or a movement of a gaze on one display area, or an audio such as a voice, or in some cases, even if there is no display on the screen, it should be interpreted that the present disclosure can be applied.

Furthermore, the display area 110 may display only one image or one piece of information according to the operation of the application, but the display area 110 is divided into a plurality of areas according to the service provided by the application to provide a specific image or information for each individual area, or an input may be received.

The information providing area 120 may visually provide an image, information, etc., selected by the user in the display area 110 to the user, or may additionally provide, to the user, information (e.g., labels, product colors, materials, patterns, lengths, etc., stored in a product database) that is determined by the user device to be necessary for personalization of the user according to a predetermined configuration.

The control area 130 may display buttons, etc., necessary for controlling an application, and may include a "CHECK" button for the user to check the status (e.g., a label for user's personalization, product color, etc.) related to the recommendation service while the application is running, a "DONE" button used for the user to complete the current stage of the fashion item recommendation service and receive additional services or terminate the service, a "RANDON" button for displaying product items displayed in the display area in random order or based on priority based on image similarity, etc., and a "SHOP" button for allowing the fashion item selected by the user or the fashion item displayed on the display area to be purchased directly through a web page, online shop, etc.

However, as described above, the information providing area 120 and the control area 130 do not necessarily exist to provide a recommendation service using fashion items composed of multi-layers according to the present disclosure and may be omitted in some cases.

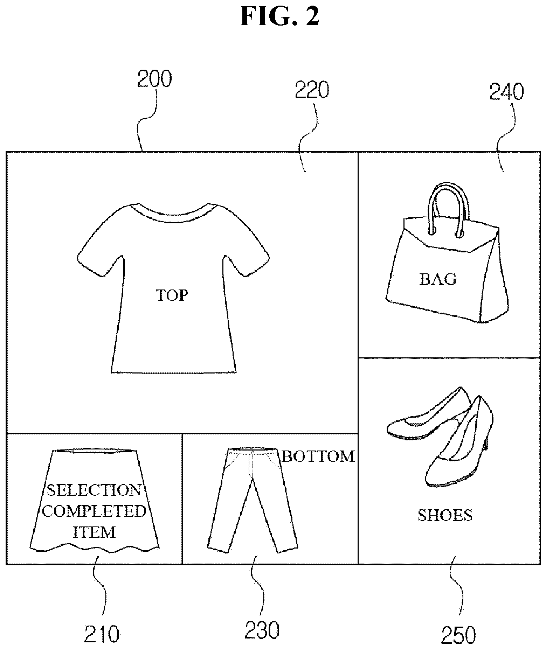

FIG. 2 is a reference diagram illustrating a display screen 200 of the user device for providing a recommendation item service for fashion items composed of multi-layers according to another embodiment of the present disclosure.

The screen 200 of the user device according to the present disclosure may be divided and displayed into a fashion item 210 selected by a user, and a top 220, a bottom 230, an accessory 240 such as a bag, and a fashion accessory 250 such as shoes, which match the selected fashion item 210. Therefore, when the user selects a specific fashion item, the selected fashion item is displayed in the area 210 allocated for the specific fashion item on the display screen 200, and items (e.g., a top and a bottom or a top and a bag having different categories from the selected specific fashion item may be displayed on the display screen. Accordingly, users can complete their personalized outfits by selecting a fashion item of another category that matches the selected fashion item.

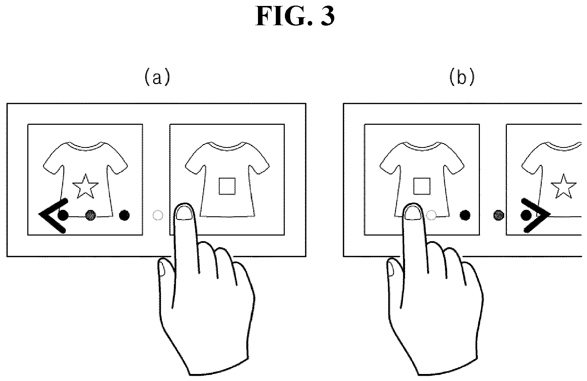

FIG. 3(a) and FIG. 3(b) are reference diagram illustrating a scenario in which a user's input is received through a swipe gesture when a recommendation item service for fashion items composed of multi-layers is provided according to an embodiment of the present disclosure.

As shown in FIG. 3(a), fashion items composed of multi-layers may be displayed in parallel on the user device. In this case, when a swipe gesture that slidably moves from right to left on the screen is input using a user's finger or an electronic pen, the user device may make the fashion item at a specific location slidably disappear according to the swipe gesture and may then additionally display another fashion item on the screen at the opposite location. Accordingly, the new fashion item can be displayed on the display screen as shown in FIG. 3(b), and the fashion item may be redisplayed as shown in FIG. 3(a) by inputting a swipe gesture that slidably moves from left to right, which is the opposite direction to the above.

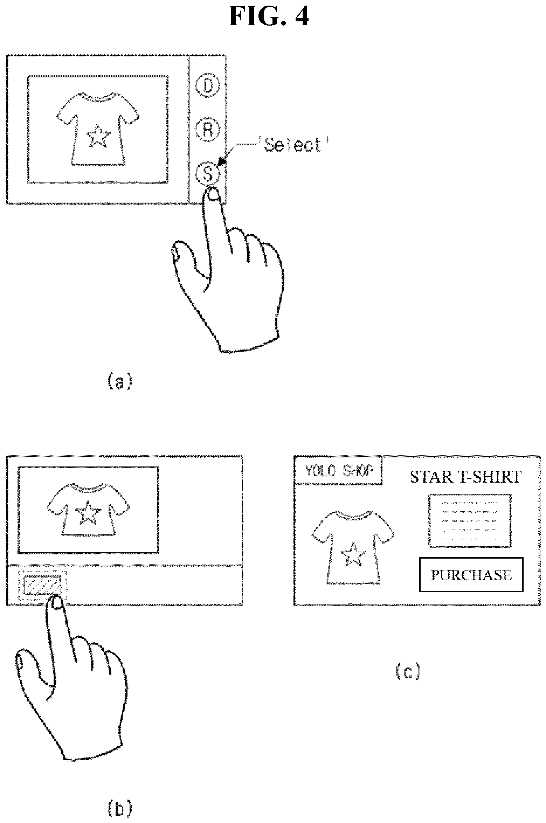

FIG. 4 is a reference diagram illustrating a scenario in which a recommendation item service for fashion items composed of multi-layers is provided according to an embodiment of the present disclosure, and when a user selects a specific fashion item, a user's purchase is induced by connecting to the selected fashion item.

In FIG. 4, after selecting a specific fashion item, or to know additional information on the specific fashion item, a user may be directly connected to a web page or online shop through a link or thumbnail provided by an application. For example, the user may touch a "SELECT" button for the specific fashion item displayed on the user device as shown in FIG. 4(a), or by touching and inputting a preference display (e.g., "Like" button, etc.) that is displayed on the user device as shown in FIG. 4(b) or an image stored in the form of a thumbnail that is determined to be preferred through a swipe gesture, a relay service may be provided so that a link to a web page or online shop that sells the specific fashion item is possible.

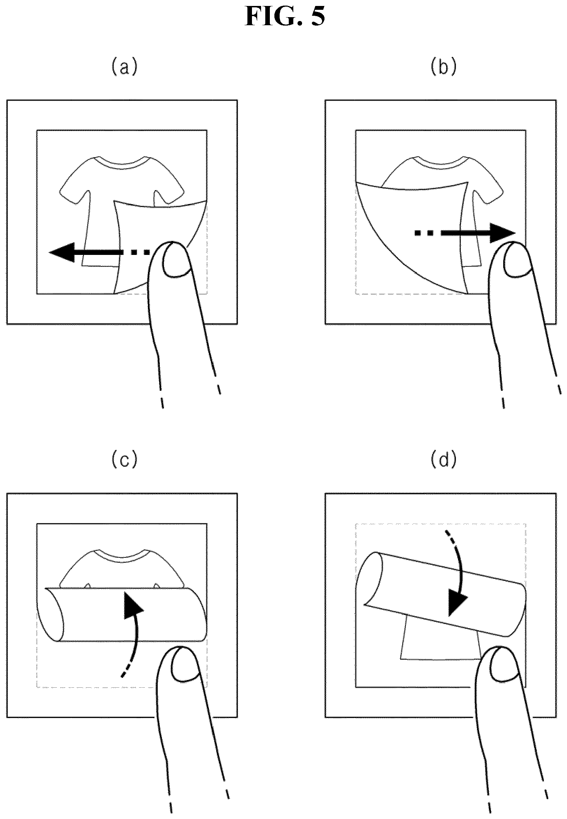

FIG. 5 is a reference diagram illustrating an example of displaying a current layer being displayed according to a direction of a swipe gesture for the user device. When the direction of the swipe gesture is determined in a specific direction through the display screen of the user device according to the present disclosure, the shape of the displayed layer may be changed and displayed accordingly. In other words, since the layer in the present disclosure may have the same form as one web page that the user can receive through the screen, one direction of the web page may be changed according to the user's swipe gesture. For example, by determining from the start point to the end point of the user's swipe gesture, an effect as if a paper page is fluttering may be provided to the user.

For example, as shown in FIG. 5(a), when the user makes a swipe gesture like sliding from the right to the left using a finger, etc., an effect as if the lower right corner is fluttering to the left may be displayed to the user.

Similarly, as shown in FIG. 5(b), when the user makes a swipe gesture like sliding from the left to the right using a finger, etc., an effect that the lower left corner is fluttering to the right may be displayed to the user.

Alternatively, as shown in FIG. 5(c), when the user makes a swipe gesture like sliding from the bottom to the top using a finger, etc., an effect as if the corner of the lower end is fluttering to the upper end may be displayed to the user.

On the contrary, as shown in FIG. 5(d), when the user makes a swipe gesture like sliding from the top to the bottom using a finger, etc., an effect as if the corner of the upper end is fluttering to the lower end may be displayed to the user.

The effects of FIGS. 5(a) to 5(d) are only one effect that the user device displays to the user according to the user's swipe gesture, and thus it should not be interpreted that the present disclosure is limited thereto. In some cases, the user may apply an input that cannot be determined to be a swipe gesture through a finger or the like (e.g., when the user makes a swipe gesture on the display using a finger, and then does not remove the finger from the display). In these cases, it may be possible to give other effects to a specific layer or web page centering on the input using the user's finger (e.g., a motion effect such as turning a book page and not turning the same).

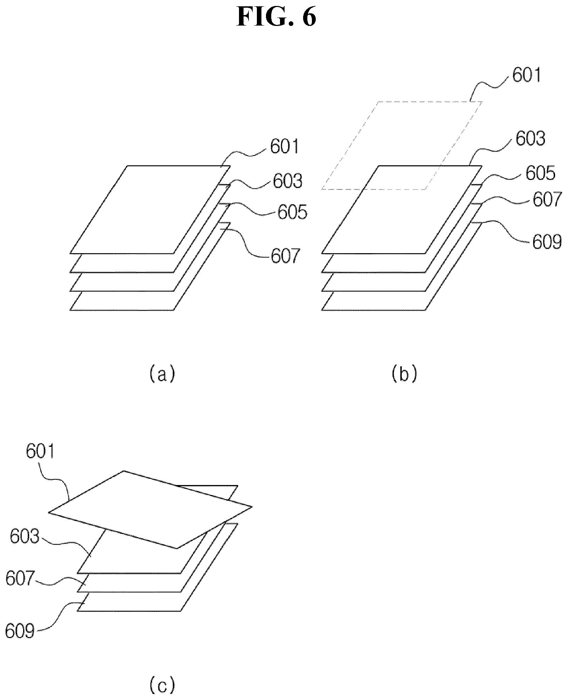

FIG. 6 is a reference diagram illustrating multi-layers configured to be associated with fashion items according to an embodiment of the present disclosure. In the present disclosure, a plurality of layers 601, 603, 605, 607... related to fashion items may be displayed first according to their priorities, but in some cases, the order may be configured at random. Hereinafter, for convenience of description, a case of displaying a layer having priority will be described. In the relationship between layers in multi-layers, a specific layer displayed on the user device may be defined as a current layer, and a newly displayed layer may be defined as the next layer when the current layer is not displayed. Accordingly, in the case of FIG. 6, if a layer 601 is a current layer, a layer 603 corresponds to the next layer of the layer 601, and a layer 605 may be defined as the next layer of the layer 603. Conversely, the current layer is displayed, but a layer displayed or to be displayed to the user before the current layer may be defined as a previous layer. That is, in the case of FIG. 6, if the layer 603 is a current layer, the layer 601 may correspond to a previous layer of the layer 603, and the layer 603 may be defined as a previous layer of the layer 605.

However, in the relationship between the layers shown in FIG. 6(a), it is assumed that the layers are sequentially arranged and displayed with a priority. However, when the layers are configured to be displayed randomly, the order such as the layer 601 -> the layer 605 -> the layer 607 -> layer 603 may be displayed to the user, and in this case, the previous layer and the next layer need to be newly defined.

FIG. 6(b) is a reference diagram illustrating, when a user's preference is reflected for fashion items composed of multi-layers, a method of reflecting this for the fashion items composed of multi-layers. When the layer 601 receives a swipe gesture by a user, fashion items composed of the multi-layers may be updated according to whether the user selects the fashion item displayed on the layer 601. For example, when simply instructing switching/replacement for the above-described previous layer, current layer, and next layer, fashion items on the layer determined according to priority/random order may be displayed to the user. However, when it is determined that the user selects or excludes a specific layer, the configuration of the fashion items included in the multi-layers may be updated. For example, when a specific fashion item associated with the layer 601 is selected (e.g., determined as the highest priority), on a newly added layer 609 in consideration of a label (e.g., "warmth", "office look" ...), color, material, pattern, length, etc., of the specific fashion item associated with the layer 601, fashion items with similar features may be associated. Conversely, when a specific fashion item associated with the layer 601 is excluded (e.g., determined in the lowest order), on the newly added layer 609, some of the label (e.g., "warmth", "office look" ...), color, material, pattern, length, etc., of the specific fashion item associated with the layer 601 may be excluded and displayed to the user, or the specific fashion item associated with the layer 601 may be configured simply not to be related to the multi-layers.

In addition, when a specific layer is raised to the upper end of the display screen according to the user's swipe gesture as shown in FIG. 6(c), the user device may fix the corresponding layer and may additionally display another layer to the user.

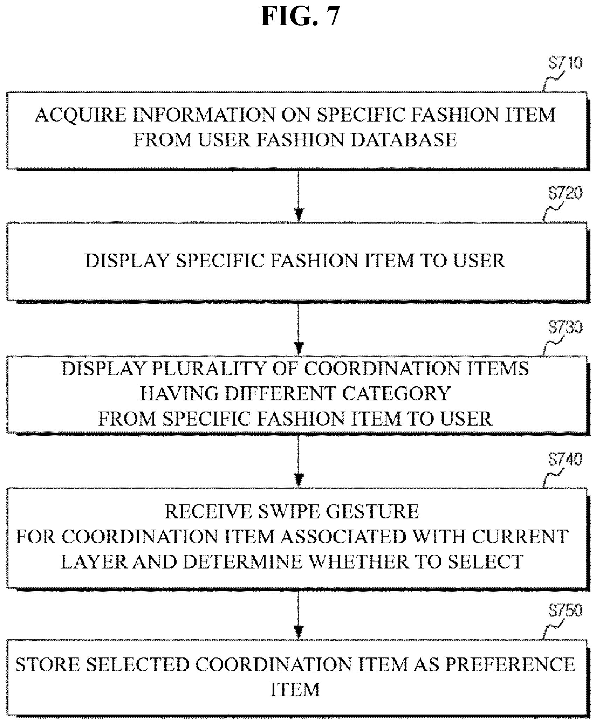

FIG. 7 is a flowchart illustrating a method of providing a recommendation service to a user by using fashion items composed of multi-layers according to an embodiment of the present disclosure.

First, in operation S710, the user device may load a specific fashion item from a user fashion database. Here, the user fashion database may be generated based on a plurality of fashion items worn by a user, extracted from an image, through which the user can be identified, which is stored in the user device 100.

For example, among images stored in the user device through the user database, images through which the user can be identified may be image-processed, and fashion items worn by the user may be extracted and sorted based on the user's face. Next, a recommendation product may be provided based on the corresponding fashion item. If a picture of a user A wearing a white bag and a brown suit exists in the user device, a "white bag" and a "brown suit" may be sorted and stored in the user fashion database based on the face of the user A. Therefore, when the user requests a recommendation service for a fashion item that matches well with the brown suit included in the user fashion database, a coordination item may be recommended based on a photo in which a brown suit and shoes math through a style database learned using fashion magazines, etc.

That is, when receiving a request for a style recommendation for the brown suit, the user device may recommend an item of a shoe category that matches the brown suit well and the user size by referring to the style database, product database, and user fashion database which have been generated in advance, and may provide online market information of the recommended shoes together.

More specifically, when the user specifies an arbitrary fashion item in the user fashion database and makes inquiry about the specified fashion item, the user device may first search the style database based on image similarity of a fashion item object to determine an item similar to the requested item. Next, the user device 100 may check other items that match together with the similar item in the image included in the style database, and may determine a coordination item by reflecting user size information among the other items.

Next, the user device may search the product database for the coordination item based on the image similarity, may configure a priority according to user size information, and may determine a recommendation product.

In this case, the user device may acquire all images stored in the user device and may use only images through which the user can be identified among them, but based on the identification information sorted in the user device, only image for a specific user may be acquired.

For example, if there are images sorted based on the face of the user A in the user device, image processing may be performed by acquiring only the corresponding images. This is because unnecessary photos and the like may be included in the user device, and thus the accuracy of the recommendation service may be improved by using the sorted images, and unnecessary processing operations of the server may be prevented.

The user device may use a user fashion database generated by extracting a plurality of fashion items worn by the user from the image capable of identifying the user. When a product image that can be checked on a web page (e.g., an online shopping mall or a clothing brand homepage) or is linked with the web page is input by the user, a fashion item for the product image may be added to the user fashion database. For example, the user A may capture an image from the online page of a shopping mall where the bag was purchased and may add the captured image to the user fashion database. If the link of a specific site is entered, the image of the corresponding site may be added to the user fashion database.

In addition, the user fashion database may include information on fashion items, such as the size of the fashion item, a label expressing the feeling that a person feels from the fashion item in computer-recognizable data, and a picture when a user performs fitting. For example, the user fashion database may include necessary size information such as a user's top, bottom, dress, etc., and the appearance when actually fitting clothes may be managed as a photo, allowing the user to perform fitting in consideration of their body shape. Alternatively, the fashion items may be stored to include personal feelings such as #comfort, #tight, #appropriate, and the like respectively, so that the user can refer to the stored fashion items including the personal feelings when considering a fit upon selecting a fashion item in the future.

Furthermore, the user fashion database may be updated based on a color, material, pattern, and length of a fashion item that the user mainly purchased, and a history of fashion items purchased in an online shopping mall, etc.

When a recommendation service request for a specific fashion item stored in the user fashion database generated as described above is received from the user device, in operation S720, the user device may display the specific fashion item in a main item display area of the user device. This may be displayed as a part of the entire area on the display screen, and in some cases, the display of the main item may be omitted.

The user device may need to search for an item similar to the specific fashion item based on the image similarity from the style database. When a similar item is searched, an item of a category different from that of the similar item may be determined as a coordination item from a style image in which the similar item is searched.

Accordingly, in operation S730, the user device may configure products similar to the coordination item as a coordination item list based on the image similarity from the product database, and may provide the coordination item list to the user in the form of a layer popup. In this case, based on information on the fashion items included in the user fashion database, the user device may provide the coordination item list to the user to allow the user to predict a fit when purchasing a recommendation product. If there is a label extracted from the contents of the product in the product database, the label may be provided to the user together with the information on the fashion items included in the user fashion database.

When the recommendation product is provided from the user device, the user may choose to purchase the recommendation product. In this case, a product order service may be provided through a web page for the recommendation product according to the user's selection.

In operation S740, the user device may determine whether to select the specific coordination item according to a swipe gesture received for the specific coordination item configured in a current layer displayed in a coordination item area.

Here, the user device may perform different operations according to whether the direction of the swipe gesture corresponds to a predetermined direction. Furthermore, rankings, preferences, etc., according to the predetermined direction may be previously specified by an application manufacturer, but may be reconfigured by the user.

For example, if the direction of the swipe gesture corresponds to a direction indicating a pre-designated highest priority, it may be determined that a specific coordination item is selected. In this case, a product similar to the specific coordination item may be updated in the coordination item list based on the image similarity. However, if the direction of the swipe gesture is the opposite direction to the direction indicating the pre-designated highest priority, the specific coordination item may be excluded from the coordination item list, or the coordination item list may be updated to exclude product features (e.g., label, length, fabric, etc.) associated with the specific coordination item.

Alternatively, when the direction of the swipe gesture instructs to switch to a pre-designated previous layer or to a pre-designated next layer, as in the description above with respect to FIG. 6, a coordination item configured in the previous layer of a current layer may be displayed, or a coordination item configured in the next layer of the current layer may also be displayed. At this time, if the user's swipe gesture is not terminated for reasons such as the user's finger not falling off the display, based on the direction of the swipe gesture according to the above description with reference to FIG. 5, the shape of the current layer may be modified and displayed on the coordination item display area.

When the specific coordination item is selected, in operation S750, the user device may store the specific coordination item as a preferred item. This preferred item may be displayed in a selection item display area of the user device. When an input for the preferred item is received as described above in the description of FIG. 4, a product purchase service may be provided through a web page associated with the preferred item.

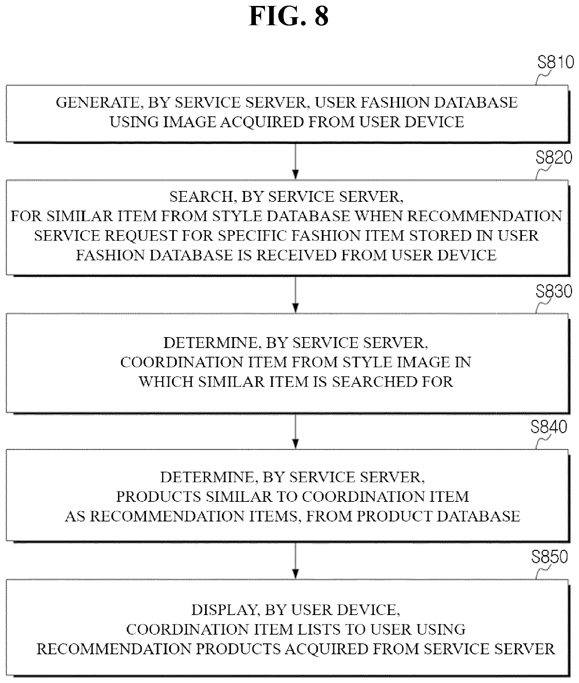

FIG. 8 is a reference diagram illustrating a method of providing a fashion item recommendation service by the user device through a service server according to an embodiment of the present disclosure. That is, the user device may itself provide the recommendation service to the user as described above, but may also provide the recommendation service through a service server in order to provide a more suitable service using more data.

First, in order to provide a recommendation service according to the present disclosure, in operation S810, a service server may acquire an image capable of identifying a user from the user device and may generate a user fashion database. As a method of acquiring an image, an image may be acquired from the user device, or a product image that can be checked or linked on a web page (e.g., an online shopping mall, a clothing brand home page, etc.) may be input from the user. In the present disclosure, a fashion item extracted from the image may be stored in the user fashion database. Furthermore, the user fashion database may include the size of the fashion item, a label that expresses the feeling that a person feels from the fashion item in computer-recognizable data, image information when a user performs fitting, or may include information that can estimate the user's taste, such as user's purchase data and browsing time data, user's size information, and information on preferred prices, usages, and brands at the time of online shopping for the fashion item.

Alternatively, the user fashion database may include user identification information, user behavior information for estimating the user size, user size estimated from the behavior information, and user size information directly received from the user device.

For example, the service server may provide a query to the user device about the user's age, gender, occupation, fashion field of interest, already possessed items, and the like, may generate user size information by receiving a user input for the query, and may reflect the generated user size information in the user fashion database.

The service server may combine the time when the user browses an arbitrary stylebook provided through an application according to an embodiment of the present disclosure, item information that generate a like tag, a request item, fashion item information purchased through the application or other applications, and user behavior information for estimating the user size, such as time information at which the above information was generated, may generate taste information for a style that the user is interested in at the time and may reflect the generated taste information in the user fashion database.

In addition, the service server may generate the user's body shape information and reflect it in the user fashion database. For example, if the user device generates a body image obtained by photographing the user's body from a plurality of angles and transmits the generated body image to the service server, the service server may generate a user's body shape model from a machine learning framework that learns human body features from a large amount of body images. The user's body shape model may include not only size information on each part of the user's body, but also information on a ratio of each part of the user's body and skin tone.

In addition, the service server may generate preference information for a user's fashion item and may reflect the generated preference information in the user fashion database. The preference information may include information on a user's preferred price, preferred brand, and preferred usage. For example, when a fashion item is browsed or purchased through an online market in the user device, the service server may generate information on the preferred price, preferred brand, and preferred usage by reflecting different weights for the browsing or purchase, and may reflect the generated information in the user fashion database.

In particular, the service server according to an embodiment of the present disclosure may estimate a user's taste corresponding to a human feeling, may generate the estimated taste information in a form recognizable by a computer, and may reflect the generated information in the user fashion database.

For example, the service server may extract a label for estimating the user's taste from the user's behavior information. The label may be extracted as the meaning of fashion items included in the user behavior information, such as a stylebook viewed by the user, an item for which a like tag is generated, a request item, a purchase item, and the like. Furthermore, the label may be generated as information on a look and feel such as appearance and feeling of fashion items included in the user behavior information, and information on trends.

The label generated from the user behavior information may be applied with a weight according to the user behavior, and the service server may combine the labels to generate user size information capable of estimating the user size and store the generated user size information in the user fashion database. The user size information, the user body shape information, and the user preference information included in the user fashion database may be used to configure a recommendation item or an exposure priority for the recommend item.

When a recommendation service request for a specific fashion item stored in the user fashion database is received from the user device, in operation S820, the service server may search for an item similar to the specific fashion item based on the image similarity from the style database. For example, the user may select a photo of the specific fashion item of the user device, and may request product information of the corresponding fashion item or may transmit a request for recommending a coordination item suitable for the specific fashion item to the service server. Here, the user device may first determine whether an object of a predetermined category is included in the displayed image, and may then specify the object as the specific fashion item. Furthermore, when the image contains objects for a plurality of fashion items, the user device may be operated to specify each object and transmit only a request for an object selected by the user.

The style database may include information on fashion images that can refer to fashion styles and coordination of a plurality of items among images collected on the web. The style database may include an image (referred to herein as a "style image") in which the plurality of fashion items matches well among the images collected online, and sorting information on the style image. The style image according to the embodiment of the present disclosure may be image data generated by combining a plurality of fashion items in advance by an expert or semi-professional, and may include fashion catalogs that can be collected on the web, fashion magazine pictorial images, fashion show shot images, idol costume images, clothing images of a specific drama or movie, SNS, blog celebrity costume images, street fashion images in fashion magazines, and images coordinated with other items for the sale of fashion items.

Thus, the style image may be stored in the style database according to an embodiment of the present disclosure, and may be used to determine other items that match a particular item well. According to this, the style image can be used as a reference material that the computer can understand about the human feeling that matches an arbitrary item well. Since matching the arbitrary item well is about human feeling, in order for a computer to recommend other items that match a certain item well without human intervention, a machine learning framework that has been trained on the matching of multiple fashion items is required. To this end, the service server according to an embodiment of the present disclosure may collect style images worn by a person by combining a plurality of fashion items by an expert or a semi-professional, and may generate the collected style images as the style database. Furthermore, the service server may allow the style database to learn the framework by applying the style database to the machine learning framework. For example, the machine learning framework that learned a large amount of style images in which a blue shirt and a brown tie match may recommend the brown tie as a coordination item with respect to a request for the blue shirt.

In addition, in order to configure the style database, the service server may collect style images online. For example, the service server may collect a list of web addresses such as fashion magazines, fashion brands, drama production companies, celebrity agencies, SNS, online stores, etc., and may check the website to track links, thereby collecting image information included in the website.

Meanwhile, the service server according to the embodiment of the present disclosure may collect and index images from websites such as fashion magazines, fashion brands, drama production companies, celebrity agencies, SNS, online stores, etc., but may be separately provided with image information together with index information from affiliated companies.

Accordingly, the service server may filter out images unsuitable for style recommendation among the collected images. For example, the service server may filter the remaining images, leaving only images including person-shaped objects among the collected images and including a plurality of fashion items.

Since the style image is used to determine other items that can be coordinated with the requested item, it is appropriate to filter the image for a single fashion item. Furthermore, configuring a database with images of a person wearing a plurality of fashion items directly may be more useful than an image of the fashion item itself. Accordingly, the service server according to the embodiment of the present disclosure may determine the style image included in the style database by filtering the remaining images while leaving only images including the person-shaped objects and the plurality of fashion items.

Next, the service server may process the features of a fashion item object image included in the style image. More specifically, the service server may extract image feature of the fashion item object included in the style image, may express the feature information as a vector value to generate a feature value of the fashion item object, and may index the feature information of the images.

Furthermore, the service server according to the embodiment of the present disclosure may extract a style label from the style image and may cluster the style images based on the style label. It is appropriate that the style label is extracted as the look and feel and trend of the fashion item's appearance and feeling. According to a preferred embodiment of the present disclosure, a label for a feeling that a person can feel from the appearance of a single fashion item included in the style image, a combination of a plurality of items, etc., may be extracted and used as a style label. For example, a celebrity look, a magazine look, a summer look, a feminine look, a sexy look, an office look, drama outfits, Chanel outfits, etc., may be exemplified as the style label.

According to an embodiment of the present disclosure, the service server may define the style label in advance, may generate a neural network model that learns features of an image corresponding to the style label, may sort objects in the style image, and may extract a label for the corresponding object. In this case, the service server may assign the corresponding label to an image that matches a specific pattern with an arbitrary probability through the neural network model that has learned the pattern of the image corresponding to each label.

According to another embodiment of the present disclosure, the service server may form an initial neural network model by learning features of an image corresponding to each style label, and may apply a large number of style image objects to the formed initial neural network model to extend the neural network model more elaborately.

Meanwhile, according to another embodiment of the present disclosure, the service server may apply the style images to a neural network model formed in a hierarchical structure composed of a plurality of layers without additional learning about the label. Furthermore, it is possible to assign a weight to the feature information of the style image according to the request of the corresponding layer, to cluster product images using the processed feature information, and to assign a label that is interpreted posteriorly as the celebrity look, the magazine look, the summer look, the feminine look, the sexy look, the office look, the drama outfits, the Chanel outfits, etc., to the clustered image group.

Accordingly, the service server may cluster the style images using the style label, and may generate a plurality of stylebooks. This is intended to be provided as a reference to the user. The user may browse a specific stylebook among a number of stylebooks provided by the service server to find a favorite item, and may request product information search for the item.

Meanwhile, the service server may pre-sort items with a very high appearance rate, such as white shirts, jeans, and black skirts. For example, jeans are a basic item in fashion, so their appearance rate in the style images is significantly high. Therefore, no matter what item the user inquiries about, the probability of matching jeans as a coordination item will be much higher than that of other items.

Accordingly, the service server according to the embodiment of the present disclosure may pre-classify an item with a significant high appearance rate in the style image as a buzz item, and may generate a stylebook with the buzz item and a stylebook not including the buzz item.

According to another embodiment of the present disclosure, the buzz items may be classified by reflecting time information. For example, when considering the fashion cycle of fashion items, items that are temporarily fashionable for one or two months and disappear, fashionable items that return every season, and items that continue to be fashionable for a certain period of time may be considered. Therefore, if a specific fashion item has a significantly high appearance rate during a certain period by reflecting time information in the classification of the buzz items, the corresponding item may be classified as the buzz item together with information about the period. When classifying the buzz items as described above, there is an effect of being able to recommend the corresponding item in consideration of whether an item to be recommended is in fashion or irrelevant to the fashion in a subsequent operation of recommending the item.

That is, the service server according to the present disclosure may process a specific fashion item object included in the received request and may search the style database based on image similarity. That is, the service server may search for a similar item in the style database by processing an image object specified as a search target.

To this end, the service server may extract features of the image object to be searched and may index specific information of images for searching efficiency.

Furthermore, the service server according to the embodiment of the present disclosure may extract a label and/or category information on the meaning of the object image to be searched by applying machine learning technique used to build the product image database to the processed object image to be searched. The label may be expressed as an abstracted value, but may be expressed in a text form by interpreting the abstracted value.

For example, the service server according to the embodiment of the present disclosure may extract labels for women, dresses, sleeveless, linen, white, and casual look from the request object image. In this case, the service server may use the label for women and dresses as category information of the request object image, and may use the label for sleeveless, linen, white, and casual look as label information describing features of the object image other than the category.

Next, the service server may search the style database based on the similarity of the request object image. This is to search for items similar to the request image in the style database to check other items that match the similar items in the style image. For example, the service server may calculate the similarity of feature values of the request object image and the fashion item object images included in the style image, and may check an item whose similarity is within a predetermined range.

Furthermore, the service server according to the embodiment of the present disclosure may process the feature values of the request image by reflecting weights required by a plurality of layers of an artificial neural network model for machine learning configured for the product database, may select at least one fashion item group included in the stylebook having a distance value within a predetermined range from the request image, and may determine items belonging to the group as similar items.

Meanwhile, according to a preferred embodiment of the present disclosure, the service server may search the style database based on the similarity of the request image to determine the similar item, and at this time, the label and category information extracted from the image may be used to increase the accuracy of the image search.

For example, the service server may calculate the similarity between the request image and the feature value of the style database image, and may determine the similar item by excluding products in which label and/or category information does not match the label and/or category information of the request image among products with a degree of similarity above a predetermined range.

As another example, the service server may calculate the item similarity only in the stylebook having the label and/or category information matching the label and/or category information of the request image.

For example, the service server according to an embodiment of the present disclosure may extract the style label from the request image and may specify the similar item based on the request and the image similarity in a style book matching the label. Obviously, the service server may not extract a separate label from the request image, and may specify the similar item based on the image similarity with the request image in the style database.

For example, if there is a leaf pattern dress in the image included in the request, the service server may extract a label of tropical from the request. Next, the service server may specify the similar item having the similarity of a predetermined range with the leaf pattern dress in a style book clustered with the label of tropical.

Next, the service server may provide the user device with a style image that includes the similar item searched for in the style book and in which the similar item is combined with other fashion items. In the above example with the leaf pattern dress, a style image in which a straw hat, a ratan bag, and the like are combined together with the leaf pattern dress may be provided to the user.

When the item similar to the specific fashion item is searched for in the style database, in operation S830, the service server may determine a coordination item by checking fashion items of other categories included in the style image by combining the fashion items with the similar item.

That is, the specific fashion item inquired by the user may be searched for based on the image similarity in the style database, and with respect to the style image including the similar item, a fashion item of another category that match together with the similar item may be considered as the recommendation item. This is because the service server according to the embodiment of the present disclosure learns that other items that match together with the request item in the style image match well.

When the coordination item is determined using the style database, in operation S840, the service server may determine products similar to the coordination item from the product database as recommendation products.

The product database may include detailed product information such as origin, size, sales vendor, and wearing shots of products sold in the online market, and the product information may be configured based on the image of the product.

That is, the service server may collect not only of product information of a pre-affiliated online market, but also of product information on products sold in an arbitrary online market. For example, the service server may have a crawler, a parser, and an indexer to collect web documents of an online store, and may access text information such as product images, product names, and prices included in the web documents.

For example, the crawler may deliver product information-related data to a service server by collecting a list of web addresses of online stores and tracking links by checking websites. At this time, the parser may analyze the web documents collected during the crawling process to extract product information such as product images, product prices, and product names included in the page, and the indexer may index the corresponding location and meaning.

Meanwhile, the service server according to an embodiment of the present disclosure may collect and index the product information from the website of the online store, but may receive product information in a predetermined format from an affiliate market.

The service server may process product images. This is to determine the recommendation item based on the similarity of the product images, without relying on text information such as a product name or a sales category.

According to the embodiment of the present disclosure, the recommendation item may be determined based on the similarity of the product images, but the present disclosure is not limited thereto. That is, depending on the implementation, the product name or sales category as well as the product image may be used alone or as an auxiliary request. To this end, the service server may generate a database by indexing the text information such as the product name and product category in addition to the image of the product.

According to a preferred embodiment of the present disclosure, the service server may extract features of the product image and may index feature information of images for efficiency of search.

More specifically, the service server may detect a feature region (Interest Point Detection) of the product images. The feature region refers to a main region for extracting a descriptor for features of an image to determine the similarity between images, that is, a feature descriptor.

According to an embodiment of the present disclosure, such a feature region may be a contour line included in an image, a corner of the contour, a blob that is distinguished from the surrounding area, a region that is invariant or co-variable according to the deformation of the image, or a zenith with a feature that is darker or brighter than the ambient brightness, a patch (a piece), or the entire image.

Furthermore, the service server may extract the feature descriptor from the feature region. The feature descriptor is obtained by expressing the features of an image as vector values.

According to the embodiment of the present disclosure, the feature descriptor may be calculated using the position of the feature region for the corresponding image, or brightness, color, sharpness, gradient, scale, or pattern information of the feature region. For example, the feature descriptor may be calculated by converting a brightness value, a brightness change value, or a distribution value of the feature region into a vector.

Meanwhile, according to the embodiment of the present disclosure, the feature descriptor for an image can be expressed as not only a local descriptor based on the feature region as described above, but also a global descriptor, a frequency descriptor, a binary descriptor, or a neural network descriptor.

More specifically, the feature descriptor may include a global descriptor that is extracted by converting the brightness, color, sharpness, gradient, scale, pattern information, etc., of the entire image, each region obtained by dividing the image by an arbitrary criterion, or each feature region into a vector value.

For example, the feature descriptor may include the frequency descriptor that is extracted by converting the number of times specific descriptors classified in advance are included in an image and the number of times global features such as a conventionally defined color table are included, and the like into vector values, the binary descriptor that extracts whether each descriptor is included or whether the sizes of respective element values constituting the descriptor are greater or less than a specific value in units of bits and then converts the extracted value into an integer type, and the neural network descriptor that extracts image information used for learning or classification in the layer of the neural network.

Furthermore, according to an embodiment of the present disclosure, a feature information vector extracted from the product image may be converted into a lower dimensional vector. For example, the feature information extracted through the artificial neural network may correspond to 40,000-dimensional high-dimensional vector information, and it is appropriate to convert the feature information into a low-dimensional vector in an appropriate range in consideration of resources required for searching.

The feature information vector may be converted using various dimensional reduction algorithms such as PCA and ZCA, and the feature information converted into the lower dimensional vector may be indexed into the corresponding product image.

Furthermore, the service server according to the embodiment of the present disclosure may extract a label for the meaning of the corresponding image by applying a machine learning technique based on the product image. The label may be expressed as an abstracted value, but may be expressed in a text form by interpreting the abstracted value.

More specifically, the service server may predefine a label, may generate a neural network model that learns features of an image corresponding to the label, may classify objects in the product image, and may extract a label for the object. In this case, the service server may assign the corresponding label to an image that matches a specific pattern with an arbitrary probability through the neural network model that has learned the pattern of the image corresponding to each label.

Alternatively, the service server may learn the features of the image corresponding to each label to form an initial neural network model, and may apply a large number of product image objects to the neural network model, thereby extending the neural network model more elaborately. Furthermore, if the corresponding product is not included in any group, the service server may generate a new group including the product.

Accordingly, the service server may predefine a label that can be used as meta information for a product such as women's bottoms, skirts, dresses, short sleeves, long sleeves, patterns, materials, colors, and abstract feelings (innocent, chic, vintage, etc.), may generate a neural network model having learned features of an image corresponding to the label, and may extract a label for an advertisement target product image by applying the neural network model to a product image of an advertiser.

Alternatively, the service server may apply product images to a neural network model formed in a hierarchical structure composed of a plurality of layers without additional learning about the label. Furthermore, the service server may assign a weight to feature information of the product image according to a request from a corresponding layer, and may cluster the product images using processed feature information.

In this case, to check whether the corresponding images are clustered according to which attribute of the feature value, that is, to connect the clustering result of the images with a concept that can be recognized by a real human being, additional analysis may be required. For example, when the service server classifies products into three groups through image processing and extracts a label A for features of a first group, a label B for features of a second group, and a label C for features of a third group, it needs to be interpreted posteriorly that A, B, and C refer to, for example, a women's top, a blouse, and a plaid, respectively.

In addition, the service server may assign, to the clustered image group, labels that can be interpreted posteriorly as a women's bottom, skirt, dress, short sleeve, long sleeve, pattern, material, color, and abstract feelings (innocent, chic, vintage, etc.), and may extract the labels assigned to the image group to which individual product image belongs as the label of the corresponding product image.

Meanwhile, the service server according to the embodiment of the present disclosure may express the label extracted from the product image in a text form, and the label in the text form may be used as tag information of the product.

Conventionally, the tag information of the product was subjectively directly assigned by a seller, resulting in inaccurate and low reliability. Product tags subjectively assigned by sellers have a problem of lowering search efficiency by acting as noise.

However, as in the embodiment of the present disclosure, if label information is extracted based on the product image, and the extracted label information is converted into text and used as tag information of the product, the tag information of the product can be extracted mathematically without human intervention based on the image of the corresponding product to improve the reliability of the tag information and the accuracy of the search.

Furthermore, the service server may generate category information of the corresponding product based on the content of the product image. For example, if a label for an arbitrary product image is extracted as women, top, blouse, linen, stripe, long sleeve, blue, and office look, the service server may utilize the label for women, top, and blouse as category information of the corresponding product, and may utilize the label for linen, stripe, long sleeve, blue, and office look as label information describing the features of products other than the categories. Alternatively, the service server may index the label and the category information into the product without distinguishing therebetween. In this case, the category information and/or label of the product may be used as a parameter to increase the reliability of image search.

Accordingly, the service server may determine an item similar to the coordination item as a recommendation item from a product database configured by indexing the label extracted from the contents of the product, and may search for the item similar to the recommendation item in the product database to provide the product information for the recommendation item.

More specifically, the service server may search the product database based on image similarity for the coordination item determined using the style database.

To this end, the service server may extract features of the coordination item object and may index features information of images for efficiency of search.

The service server according to the embodiment of the present disclosure may search the product database based on the similarity of the object image. For example, the service server may calculate a similarity between the recommendation item image and feature values of the product image included in the product database, and may determine a product whose similarity is within a predetermined range as the recommendation product.

Furthermore, the service server according to the embodiment of the present disclosure may process the feature value of the recommendation item image by reflecting weights required by the multiple layers of the artificial neural network model for machine learning configured for the product database, may select at least one product group having a distance value within a predetermined range, and may determine products belonging to the group as recommendation products.

Furthermore, the service server according to another embodiment of the present disclosure may specify a recommendation product based on a label extracted from the recommendation item object.

For example, if label information of an object extracted from the recommendation item image is extracted as a women's top, blouse, white, and stripe, the service server may calculate a similarity between only a product group with the woman's top as higher category information in the produce database with the object image to be searched for.

As another example, the service server may select products having a similarity greater than or equal to a predetermined range as recommendation candidate products, and may exclude products whose lower category information is not a blouse from the recommendation candidate products. In other words, products whose lower category information is indexed by blouse may be selected as advertisement items.

As another example, if label information extracted from the object image of the recommendation item is a women's top, blouse, long sleeve, lace, or collar neck, the service server may calculate an image similarity between only a product group having the women's top, blouse, long sleeve, lace, and collar neck as a label in the product database with the recommendation item.

When the recommendation product is determined, the service server may determine the priority of exposure by reflecting user taste/size information. For example, when the user's preference information is focused on the office look, a weight may be assigned to an office look label to calculate the priority, and recommendation product information may be provided according to the calculated priority.

In operation S850, the user device may display lists of coordination items to the user as the recommendation products obtained from the service server. Further, the operation of displaying the coordination item lists to the user and receiving selection through a swipe gesture may use the contents described above in FIG. 7.

The embodiments of the present disclosure published in the present specification and drawings are provided only to provide specific examples to easily explain the technical content of the present disclosure and to aid understanding of the present disclosure, and are not intended to limit the scope of the present disclosure. It is obvious to those of ordinary skill in the technical field to which the present disclosure pertains that other modified examples based on the technical idea of the present disclosure can be implemented in addition to the embodiments disclosed here.

### Industrial availability

A service recommending for fashion items composed of multi-layers displayed on a user device using the above-described swipe gesture can be applied to various service fields.

## Claims

1. A method of providing a fashion item recommendation service using fashion items composed of multi-layers displayed on a user device, the method comprising:
configuring a coordination item list composed of a plurality of coordination items having a different category from a category of a specific fashion item to be associated with the multi-layers, and displaying the coordination item list in a form of layer popup in a coordination item display area of the user device corresponding to the different category;
determining whether to select a specific coordination item according to a swipe gesture received for the specific coordination item configured in a current layer displayed in the coordination item area; and
storing the specific coordination item as a preference item when the specific coordination item is selected.

2. The method as claimed as claim 1, wherein the determining whether to select the specific coordination item comprises:
determining that the specific coordination item is selected when a direction of the swipe gesture corresponds to a direction indicating a predetermined highest priority;
excluding the specific coordination item from the coordination item list when the direction of the swipe gesture is a direction opposite to the direction indicating the predetermined highest priority;
displaying a coordination item configured in a previous layer of the current layer on the multi-layers when the direction of the swipe gesture is a direction indicating switching to a predetermined previous layer; and
displaying a coordination item configured in a next layer of the current layer on the multi-layers when the direction of the swipe gesture is a direction indicating switching to a predetermined next layer.

3. The method as claimed as claim 2, wherein the determining that the specific coordination item is selected further comprises:
updating a product similar to the specific coordination item in the coordination item list based on image similarity from a product database configured by indexing a label for the specific coordination item.

4. The method as claimed as claim 1, wherein the determining whether to select the coordination item comprises:
modifying a type of the current layer and displaying the modified type of the current layer on the coordination item display area, based on the direction of the swipe gesture.

5. The method as claimed as claim 1, further comprising:
displaying the preference item in a selection item display area of the user device; and
providing a product purchase service through a web page associated with the preference item when an input for the preference item is received.

6. The method as claimed as claim 1, wherein the specific fashion item is acquired from a user fashion database generated based on a plurality of fashion items worn by the user, which is extracted from an image through which the user stored in the user device can be identified.
